# EUROPÄISCHE PATENTSCHRIFT

(11) **EP 1 830 165 B1**
(45) Veröffentlichungstag und Bekanntmachung des Hinweises auf die Patenterteilung: **23.04.2008**
(21) Anmeldenummer: 06090222.8
(22) Anmeldetag: 12.12.2006
(51) Int. Cl.: G01K 1/20, G01K 13/02

(54) **Aussenlufttemperaturmesser mit einer Einrichtung zur Vermeidung von Fehlmessungen bei Starkwind**
Outdoor air temperature measuring instrument comprising a device for avoiding measurement errors during strong winds
Dispositif de mesure de la température de l'air extérieur doté d'un dispositif pour éviter des erreurs de mesure lors de vents forts

(30) Priorität: 04.03.2006 DE 102006010946
(43) Veröffentlichungstag der Anmeldung: 05.09.2007
(73) Patentinhaber: Stiftung Alfred-Wegener-Insitut für Polar und Meeresforschung, 27570 Bremerhaven (DE)
(72) Erfinder: Loose, Bernd, 27638 Wremen (DE); König-Langlo, Gert, 27638 Wremen (DE)

(56) Entgegenhaltungen:
- GB-A- 2 175 693
- US-B1- 6 247 360

## Beschreibung

Die Erfindung bezieht sich auf einen Außenlufttemperaturmesser mit einem Temperatursensor und einer Einrichtung zur Zwangsbelüftung mit einem elektrisch angetriebenen Ventilator, die in einem gemeinsamen, eine Lufteintrittsöffnung und eine Luftaustrittsöffnung aufweisenden Sensorgehäuse angeordnet sind.

Derartige Außenlufttemperaturmesser werden als stationäre Geräte an Wetterstationen eingesetzt. Sie haben die Aufgabe, die Lufttemperatur an der Messstelle möglichst genau und unverfälscht durch zum Beispiel Sonneneinstrahlung oder Verdunstungseffekte zu ermitteln. Zu diesem Zweck sind die eigentlichen Temperatursensoren zur Isolation in unten und oben offenen doppelwandigen Gehäusen angeordnet und mit einer aktiven Zwangsbelüftung versehen. Ein elektrisch angetriebener Ventilator saugt zur Temperaturmessung vorgesehene Umgebungsluft durch den durch die innere Wand gebildeten inneren Raum des doppelwandigen Gehäuses mit dem Temperatursensor und gleichzeitig zur Kühlung des durch Sonneneinstrahlung erwärmten Gehäuses vorgesehene Umgebungsluft durch den durch die innere und die äußere Wand gebildeten und der Isolation dienenden äußeren Raum des doppelwandigen Gehäuses. Die Zwangsbelüftung in der Reihenfolge Eintrittsöffnung - Temperaturensor - Ventilator - Austrittsöffnung verhindert, dass die Verlustwärme des Ventilators auf den Temperatursensor zurückfällt und das Messergebnis verfälscht.

Dieses Prinzip funktioniert, auch mit verstärkten Ventilatoren, für viele gängige Umgebungsbedingungen, insbesondere in Gegenden mit starker Sonneneinstrahlung. In Gegenden mit stark auffrischendem Wind, zum Beispiel Küstenregionen, Gebirge und in der Antarktis, kann das Messergebnis dadurch verfälscht werden, dass der Wind mit Geschwindigkeiten ab z.B. 15 m/s trotz verstärkter Zwangslüfung zur Luftstromumkehr im Inneren des Temperaturmessers führt. Je nach Windeinfallwinkel kann dabei der Staudruck den Gegendruck des Ventilators aufheben und eine abwärts gerichtete Luftströmung bewirken, die die Ventilator-Abwärme zum Temperatursensor transportiert. Aus Gründen des Energiehaushalts kann insbesondere in unbewohnten Gebieten die Ventilatorleistung nicht beliebig gesteigert werden, da entweder die notwendige Energie nicht zur Verfügung steht, oder wegen der zunehmenden Verlustwärme das die Ventilator mit aufnehmende Gehäuse des Temperaturmessers unverhältnismäßig groß werden müsste.

### Stand der Technik

Auf dem Gebiet der Außenlufttemperaturmessung ist eine ganze Reihe von Messanordnungen für sehr spezifische Zwecke in der Anwendung. Insbesondere für Verbrennungsmotoren in der Fahrzeugtechnik wird die Messung der Lufttemperatur zu einem allen auftretenden Umweltbedingungen genügenden Motormanagement genutzt. Gemischeinstellungen, Zündzeitpunkte usw. werden mit Hilfe der Außenlufttemperatur und der Motor- bzw. Kühlmitteltemperatur für gute Kaltstarteigenschaften und auch während es Warmbetriebs optimiert. Bei diesen Einsätzen handelt es sich nicht um Präzisionsmessungen, wie sie zum Beispiel für wissenschaftliche Forschungen erforderlich sind. Auch kann in bewegten Messeinrichtungen der Einfluss von Verlustwärmequellen durch die Ausnutzung von Fahrtwind gesenkt werden. Bei stationären Messeinrichtungen, wie sie in der Meteorologie zur Wettervorhersage und in anderen Forschungrichtungen verwendet werden, ist dagegen der Schutz vor Sonneneinstrahlung und anderen Wettererscheinungen wie Wind, Betauung usw. von ausschlaggebender Bedeutung.

Aus der DE 43 34 509 ist ein Thermometer zum Messen der Außentemperatur bekannt, das an Hauswänden montiert werden kann. Der Temperatursensor ist in einem gegen Sonnenstrahlung isolierenden Rohr angeordnet, welches von einem von unten nach oben verlaufenden Außenluftstrom durchzogen wird. Dieser wird von einem oberhalb des Temperatursensors angeordneten elektrisch angetriebenen Ventilator erzwungen. Die Luft wird hinter dem Ventilator durch Spalte zwischen dem Gehäuse des Messsystems und der Hauswand nach oben abgeleitet, so dass die vom Ventilator erwärmte Luft den Temperatursensor nicht erreichen kann. Das ganze System wird von einem in der Gehäusevorderwand integrierten Solarpaneel mit Strom für den Ventilator und die Messelektronik versorgt. Nachteilig wirkt sich die Montage an einer Hauswand aus, die bei Erwärmung durch Sonneneinstrahlung eine aufwärts gerichtete Thermik erzeugt und bezüglich der korrekten Umgebungslufttemperatur verfälschte, zu warme Luft dem Messgerät zuführt. Dieser Umstand und die Ausstattung des Systems mit Solarzellen und Strahlungsschutzrohr, die das Gerät für einen Einsatz an einer der Sonnenstrahlung ausgesetzten Position prädestinieren, widersprechen sich, so dass zumindest für genauere Messunganforderungen keine zufriedenstellenden Ergebnisse zu erwarten sind. Außerdem können die bei starkem Wind an der Hauswand auftretenden Turbulenzen auch ohne Sonneneinstrahlung zu falschen Ergebnissen führen, wenn die Luft durch Stauung oberhalb des Messgeräts in Richtung von oben nach unten durch den Luftkanal geleitet wird und damit die Ventilatorabwärme am Temperatursensor das Messergebnis verfälscht.

Aus der GB 2 175 693 A ist ebenfalls ein Temperaturmessgerät mit Zwangsluftführung und Strahlungsschutz bekannt. Die Außenluft wird durch ein oben angeordnetes Ventilatorrad von unten nach oben durch das Instrument geführt. Die Außenhülle ist gegen Sonnenstrahlung isoliert, nach oben wird es durch einen großen Schirm abgedeckt, der Strahlungseinfluss verhindern und dabei den Strömungsweg nicht verdämmen soll. Bei aufsteigender Wärme kann dieser Schirm aber auch einen Staudruck aufbauen, der die Zwangszirkulation bis zur Umkehr mit den oben genannten Nachteilen behindern kann. Weiterhin ist aus der DE 103 12 660 A1 ein Raumbediengerät mit integrierter Raumtemperaturmessung mit waagerechter Zwangsbelüftung bekannt, das teilweise in Wanddosen unter Putz eingebaut werden kann. Der relativ enge, verdämmte Wandeinbau kann auch hier bei entsprechenden Raumströmungsverhältnissen zur Strömungsumkehr mit den beschriebenen Nachteilen führen. Darüberhinaus ist die mit dem Ventilator vor dem Temperatursensor angeordnet beschriebene Variante besonders unvorteilhaft, da der Temperatursensor unmittelbar mit der durch die Verlustwärme des Ventilatormotors erwärmten Luft umströmt wird.

Aus den Internet-Produktinformationen **"Wetterhütte Type 440"** (url: http://www.kroneis.at/download/440.pdf) und **"Temperatursensor mit Strahlungsschutz und Zwangsbelüftung, Wetterhütte Type 430"** (url: http://www.kroneis.at/download/430_dT.pdf) sind professionelle Außenlufttemperaturmesser bekannt, die über einen abgestuften Strahlungsschutz und optionale (Type 430) bzw. serienmäßige (Type 440) Zwangsbelüftung mittels Ventilatoren verfügen. Beide Geräte sind für freie Aufstellung an Masten im Rahmen von Wetterstationen vorgesehen. Vorkehrungen gegen Messwertverfälschungen bei Starkwind werden bei beiden Geräten nicht getroffen. Aus der weiteren Internet-Produktinformationen **"Temperatur, Elektrische Messwertgeber"** (url: http://www.thiesclima.com/temperatur/elektrische _messwertgeber.htm#lufttemp), von der die vorliegende Erfindung als nächstliegendem Stand der Technik ausgeht, ist ebenfalls ein professioneller Außenlufttemperaturmesser ("ventilierter Lufttemperaturgeber") bekannt, der neben dem üblichen Strahlungsschutz über eine serienmäßige Zwangsbelüftung mittels Ventilator verfügt. Auch dieses Gerät ist für freie Aufstellung vorgesehen und Vorkehrungen gegen Messwertverfälschungen bei Starkwind werden nicht getroffen.

Der Stand der Technik legt die Vermutung nahe, dass der verfälschende Einfluss von Starkwind bei Herstellern und Anwendern entweder nicht bekannt ist oder als vernachlässigbar eingeschätzt wird.

### Aufgabenstellung

Ausgehend von dem Außenlufttemperaturmesser der letztgenannten Internet-Produktinformation besteht die **Aufgabe** für die hier vorliegende Erfindung darin, einen gattungsgemäßen Außenlufttemperaturmesser zu beschreiben, der neben den üblichen Merkmalen wie Strahlungsschutz und Zwangsbelüftung einen wirksamen Schutz gegen Messwertverfälschungen bei Starkwind aufweist, dabei einfach und kostengünstig im Aufbau und im Betrieb problemlos handhabbar ist. Als erfindungsgemäße **Lösung** für diese Aufgabe ist die vorliegende Erfindung dadurch gekennzeichnet, dass die Einrichtung zur Zwangsbelüftung eine Venturidüse (VD) aufweist, deren Düsengehäuse (DG) über eine zusätzliche Luftdurchtrittsöffnung (OD) orthogonal zur Durchströmungsrichtung mit der Luftaustrittsöffnung (OA) verbunden ist, wobei durch die Durchströmung der Venturidüse (VD) mit Außenluft an der Luftdurchtrittsöffnung (OD) ein Unterdruck erzeugt wird. Vorteilhafte Ausgestaltungen des Außenlufttemperaturmessers nach der Erfindung sind den Unteransprüchen zu entnehmen.

Zur bevorzugten Verwendung in freistehenden Wetterstationen für klimawissenschaftliche Zwecke weist der erfindungsgemäße Außenlufttemperaturmesser zusätzlich zu seinen Ausrüstungen gegen Messfehler durch Sonneneinstrahlung wie verbesserte Isolation und Zwangsbelüftung eine Einrichtung zur Vermeidung von Fehlmessungen bei Starkwind z.B. ab 15 m/s auf. Sie wird von einer oben an das Sensorgehäuse anschließenden Gehäuseausprägung in Form einer Venturidüse gebildet. Die Venturidüse sorgt bei dem Luftdurchtritt bei Wind für eine erhöhte Strömungsgeschwindigkeit an ihrer Engstelle und damit an der dort orthogonal zur Durchströmungsrichtung angeordneten Luftdurchtrittsöffnung zentral oberhalb der Luftaustrittsöffnung für einen Unterdruck, der die zwischen Lufteintrittsöffnung und Luftaustrittöffnung zu Mess- und Kühlzwecken beförderte Außenluft zusätzlich zur Zwangsförderung durch den Ventilator ansaugt. Der Saugeffekt der Venturidüse ist abhängig von der Windgeschwindigkeit und der Form der Venturidüse.
Bei schwachen und mäßigen Winden unter z.B. 15 m/s wird der Hauptanteil der Zwangsbelüftung des Temperatursensors durch den elektrisch angetriebenen Ventilator übernommen. Die Außenluft wird von unten in das Sensorgehäuse und über den Temperatursensor gesaugt und durch den Ventilator nach oben aus dem Sensorgehäuse zwischen Düsenunter- und -oberteil wieder nach außen geleitet. Dabei wird die einerseits durch die Verlustwärme des Ventilators und andererseits durch die Strahlungswärme am Sensorgehäuse erwärmte, durch das Sensorgehäuse geleitete Außenluft durch den waagerecht durch die Venturidüse streichenden Wind mitgenommen und abgeführt. Dabei wird die Saugwirkung des Ventilators durch den aufgrund der Wirkung der Venturidüse an der Luftdurchtrittsöffnung des Düsenunterteils entstehenden Unterdruck je nach Windgeschwindigkeit und Düsengeometrie verstärkt. Wenn Windstärken, z.B. ab 15 m/s erreicht werden, bei denen ohne Venturidüse der Staudruck der Luft an der Luftaustrittsöffnung des Sensorgehäuses den Druck übersteigen würde, den der Ventilator aufbauen kann, beginnt die Venturidüse ihre Wirkung zu entfalten. Durch ihre der Windstärke proportionale Saugwirkung an der Luftdurchtrittsöffnung des Düsenunterteils kann nunmehr bei allen Windverhältnissen keine Luftstromumkehr im Sensorgehäuse mehr stattfinden und die Umströmung des Temperatursensors mit unverfälschter Außenluft ist sichergestellt. Umfangreiche Feldversuche mit dem neuartigen Außenlufttemperaturmesser im Vergleich mit Geräten nach dem Stand der Technik haben die Wirksamkeit der Erfindung deutlich bewiesen. Zwar ist die Venturi-Düse und ihre Wirkung theoretisch und praktisch aus einer Vielzahl von Anwendungen hinlänglich bekannt, jedoch ist der Einsatz der hauptsächlich zur Mischung von Fluiden verwendeten Düse für den hier beschriebenen Effekt der Ventilatorunterstützung bei Außenlufttemperaturmessern nicht zwingend nahegelegt. Stellvertretend für eine Vielzahl von Veröffentlichungen zu Anwendungen der Venturidüse sei hier die DE 36 34 539 genannt, aus der eine besonders einfach aufgebaute verstellbare Venturidüse bekannt ist, die z.B. in der Automobilindustrie bei der Gemischeinstellung zwischen Luft und Kraftstoff in Vergasern dienen sollte. Ferner wird die DE 36 34 539 A1 genannt, aus der eine regelbare Venturidüse in Form eines in ein größeren Rohr eingelegten und an den Enden dicht anschließenden flexiblen Schlauchs bekannt ist, deren Geometrie durch Be- und Entlüften des Raums zwischen dem Rohr und dem Schlauch verändert werden kann.

Eine besonders vorteilhafte Weiterbildung des erfindungsgemäßen Außenlufttemperaturmessers ergibt sich, wenn das Düsengehäuse aus zwei rotationssymmetrischen Körpern als Düsenunterteil und Düsenoberteil gebildet ist, die jeweils zumindest eine konvex geformte Halboberfläche gleicher Art aufweisen und die derart parallel zentral übereinander angeordnet und durch zumindest drei Abstandhalter mit einander verbunden sind, dass die konvex geformten Halboberflächen einander zugewandt sind und der Abstand zwischen ihnen aus allen Richtungen zur Mitte hin gleichartig abnimmt und dass der untere rotationssymmetrische Körper mit dem Sensorgehäuse spaltfrei verbunden ist. Die Venturdüse besteht hierbei aus zwei ähnlichen, rotationssymmetrischen Teilen, dem Düsenunterteil und dem Düsenoberteil. Das mit dem Sensorgehäuse direkt verbundene Düsenunterteil ist zum Anschluss über Anschlussmittel, z.B. Schraubverbindungen, nach unten eben und weist nach oben eine konvex gebogene Halboberfläche auf. Das zentral oberhalb des Düsenunterteils und mit Abstand dazu angeordnete Düsenoberteil weist zumindest nach unten in Richtung auf das Düsenunterteil eine identische, konvex gebogene Halboberfläche auf. Bei beliebigen senkrechten Schnitten durch die Symmetrieachse der Düse ergibt sich damit jeweils die Form der Venturidüse. Die Düsenwirkung ergibt sich aus der Geometrie der konvex gebogenen Halboberflächen der Düsenober- und -unterteile sowie deren Abstand zueinander. Durch die Rotationssymmetrie der Düse wirkt sie aus allen Richtungen gleichartig. In der Anschlussfläche des Düsenunterteils an das Sensorgehäuse ist eine Luftdurchtrittsöffnung angeordnet, die in den Abmessungen der Luftaustrittsöffnung des Sensorgehäuses oberhalb des Ventilators für die Zwangsbelüftung entspricht. Drei Abstandhalter sind gegen Abknickung bei Belastung und für die Symmetrie bei Windangriff eine notwendige und hinreichende Mindestbedingung. Weniger als drei Abstandhalter machen die Verbindung zwischen Düsenober- und -unterteil besonders labil, mehr als drei Abstandhalter behindern die Strömung durch die Düse unnötig. Die Abstandhalter können strömungsgünstig glatt mit kreisförmigen Querschnitt ausgelegt und z.B. über Gewindeenden in entsprechenden ebenen Anformungen oder Ausnehmungen an den Düsenober- und -unterteilen mittels Scheiben und Muttern befestigt sein. Auch nichtlösbare Verbindungen, z.B. Klebungen, können zum Einsatz kommen

Eine vorteilhafte Ausgestaltung des erfindungsgemäßen Außenlufttemperaturmessers ergibt sich, wenn die rotationssymmetrischen Körper Durchmesser vom ein- bis zweifachen des Durchmessers des Sensorgehäuses und größte Durchmesser-Höhen-Verhältnisse ihrer einander zugewandten konvexen Halboberflächen zwischen 50:1 und 5:1 aufweisen. Zur Entfaltung ihrer Wirkung soll der Außendurchmesser der Düse zumindest dem Durchmesser des Sensorgehäuses an deren Verbindungsstelle entsprechen. Dies ist regelmäßig der größte Durchmesser des Sensorgehäuses. Dadurch wird ein ungestörter Windangriff an der Düse gewährleistet. Ein weiter vergrößerter Durchmesser kann Turbulenzen am Düseneintritt entgegenwirken, die durch gegebenenfalls ungünstigere Formgebungen des Sensorgehäuses entstehen können. Das Maß der Einschnürung des Windkanals in der Düse wird von der gewünschten Saugwirkung in Abhängigkeit von der Stärke des Ventilators und der zu erwartenden Windstärke bestimmt. Je größer das Verhältnis zwischen äußerem Eintritts- und mittlerem Durchtrittsquerschnitt, desto größer die Düsen- und damit die Saugwirkung. Weiterhin wirkt es sich vorteilhaft aus, wenn die rotationssymmetrischen Körper einen symmetrischen Querschnitt mit derselben konvexen Form für beide Halboberflächen aufweisen, wobei der unteren Halboberfläche des Düsenunterteils zur Befestigung am Sensorgehäuse eine Abplattung oder eine Ausnehmung angeformt ist. Bei der Herstellung der Düse können damit produktionstechnisch vorteilhaft zunächst zwei identische Formen für die Düsenober- und -unterteile verwendet werden. Das Unterteil muss dann nur noch für die Verbindungsstelle flach abgetragen oder ausgenommen und mit der Luftdurchtrittsöffnung versehen werden. Die konvexe Halboberfläche an den der eigentlichen Düse abgwandten Seiten der Düsenober- und -unterteile wirkt sich turbulenzmindernd auf das Strömungsverhalten der Umgebungsluft und dient damit einerseits der ungestörten Strömung durch die Düse und andererseits der Geräuschminderung.

Eine besonders vorteilhafte Weiterentwicklung wird erreicht, wenn die rotationssymmetrischen Körper als Leichtbaustrukturen mit glatter Oberfläche ausgebildet sind. Gewichtsminderungen bei Beachtung der notwendigen mechanischen Belastbarkeit dienen ganz allgemein der besseren Handhabbarkeit bei Aufbau und Transport und sind gegebenenfalls kostengünstiger als massive Strukturen. Die glatte Oberfläche dient wiederum der Turbulenzminderung und damit den Strömungs- und Geräuschverhälnissen an der Düse. Die Leichtbaustruktur kann vorteilhaft als Hohlkörper mit selbsttragender Hülle ausgebildet sein. Hohlkörper sind leicht und können einfach hergestellt werden. Die Materialstärke der selbsttragenden Hülle muss die mechanischen Belastungen bei Transport und Betrieb tragen können ohne dabei Verformungen zu erleiden. Zur Vermeidung dickwandiger Hüllen ist es eine vorteilhafte Weiterentwicklung, wenn die Leichtbaustruktur mit streben-, waben-, schwamm- oder schaumartiger Innenstruktur und nicht selbsttragender Hülle ausgebildet ist. Solche Strukturen können mittels einschlägiger Fertigungsverfahren einfach hergestellt werden. Sie haben den Vorteil der inneren Formstabilität auch bei einem lediglich dünnen, die glatte Oberfläche bildenden Überzug oder die bei einer verdichtenden und glättenden Endbearbeitung der schwamm- oder schaumartigen Struktur entstehende Haut als Hülle.

### Ausführungsbeispiele

Ausbildungsformen des Außenlufttemperaturmessers nach der Erfindung werden nachfolgend anhand der schematischen Figuren näher erläutert. Dabei zeigt:
- **Figur 1**: den erfindungsgemäßen Außenlufttemperaturmesser in perspektivischer Außenansicht
- **Figur 2**: ein Strömungsmodell der Zwangsbelüftung an einem senkrechten Schnitt durch den Außenlufttemperaturmesser
- **Figur 3**: Aufbauausführungen der Düsenober- und -unteile

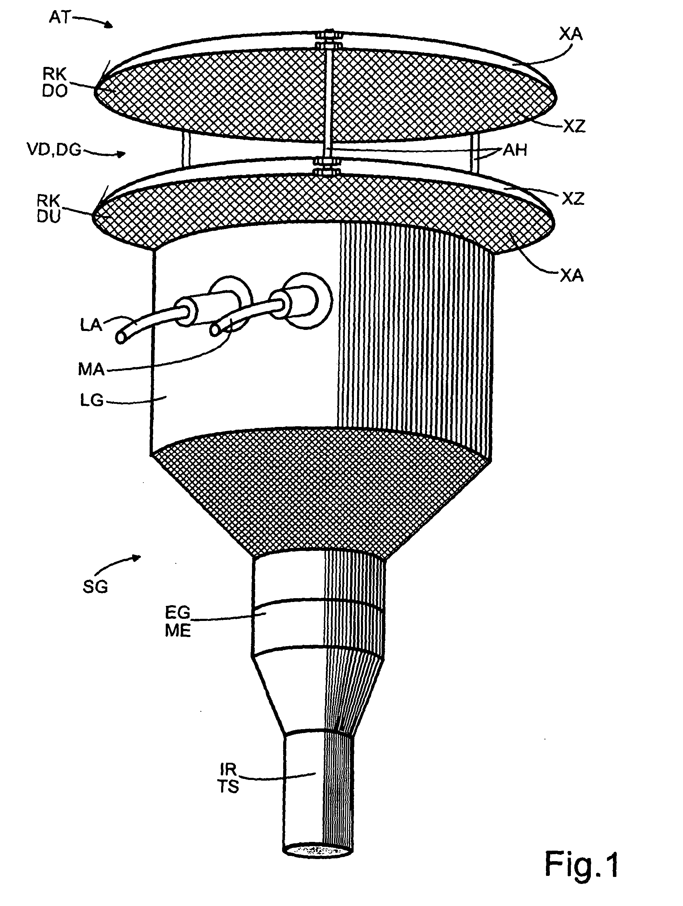

**Figur 1** zeigt den erfindungsgemäßen Außenlufttemperaturmesser **AT** in perspektivischer Außenansicht. Das Sensorgehäuse **SG** weist darin das Isolierrohr **IR** zur Aufnahme des Temperatursensors **TS,** einen zur Aufnahme der an den Temperatursensor **TS** angeschlossenen Messelektronik **ME** dienenden Gehäuseabschnitt **EG** und das Ventilatorgehäuse **LG** mit dem Ventilatoranschluss **LA** und dem Messelektronik-Anschluss **MA** auf. An der Oberseite des Sensorgehäuses **SG** schließt unmittelbar die Düse **VD** an, die aus zwei rotationssymmetrischen Körpern **RK,** dem Düsenunterteil **DU** und dem Düsenoberteil **DO** besteht. Die einander zugewandten Seiten der beiden Düsenteile **DU,DO** sind konvex geformte Halboberflächen **XZ.** Im gezeigten Ausführungsbeispiel weisen auch die abgewandten Seiten der beiden Düsenteile **DU,DO** konvex geformte Halboberflächen **XA** auf. Beide Düsenteile **DU,DO** werden von Abstandhaltern **AH** fixiert. Der Außenlufttemperaturmesser **AT** wird mit einem hier nicht gezeigten Ausleger in einiger Entfernung z.B. an einem Gittermast stationär eingerichtet.

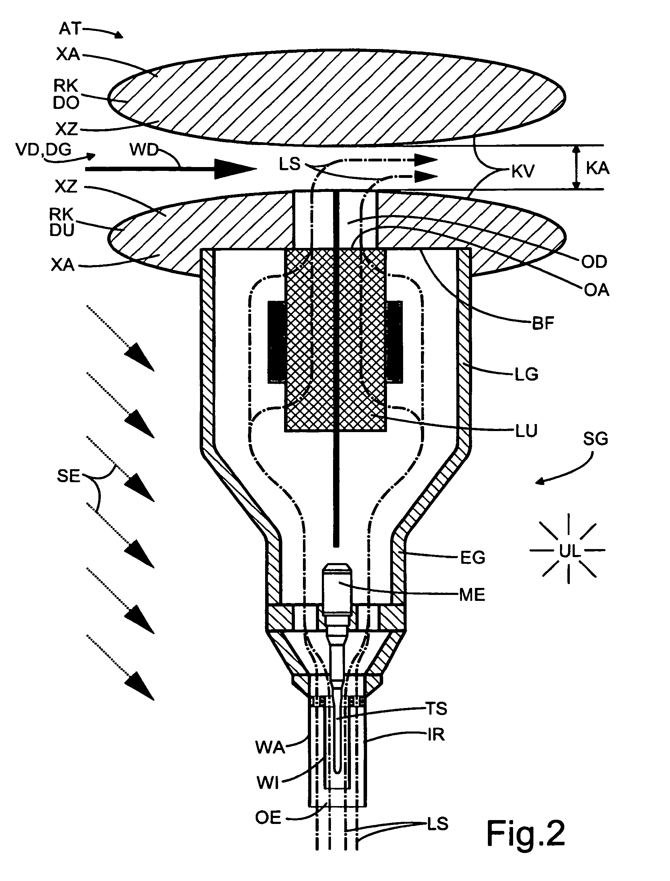

**Figur 2** zeigt ein Strömungsmodell der Zwangsbelüftung an einem senkrechten Schnitt durch den Außenlufttemperaturmesser **AT.** Der Luftstrom **LS** der zu messenden Umgebungsluft **UL** wird von unten durch die Lufteintrittsöffnung **OE** in das Isolierrohr **IR** geführt, das im Inneren den Temperatursensor **TS** aufnimmt. Das Isolierrohr **IR** ist doppelwandig mit Außenwand **WA** und Innenwand **WI.** Der doppelwandige Aufbau dient der Isolierung des Temperatursensors **TS** gegen Sonneneinstrahlung **SE,** wobei ein größerer Teil der Umgebungsluft **UL** durch den Raum zwischen der Außenwand **WA** und der Innenwand **WI** geführt wird, um die der Außenwand **WA** durch Sonneneinstrahlung **SE** zugeführte Wärmeenergie abzuführen und dem Temperatursensor **TS** fernzuhalten. Der Luftstrom **LS** wird dann durch den Gehäuseabschnitt **EG** für die Messelektronik **ME** geführt, durch den Ventilator **LU** gesaugt und durch die Luftaustrittsöffnung **OA** des Sensorgehäuses **SG** und die Luftdurchtrittsöffnung **OD** in die Düse **VD** mit ihren rotationssymmetrischen Körpern **RK** geleitet. Hier wird der Luftstrom **LS** vom Wind **WD** mitgenommen und in der Umgebungsluft **UL** verteilt. Das Düsenunterteil **DU** der Düse **VD** ist mit seiner Befestigungsfläche **BF** mit nicht weiter gezeigten Mitteln an der Oberseite des Sensorgehäuses **SG** fixiert, wobei der Ventilator **LU** hier als Doppelventilator mit zwei seitlichen Eintrittsflächen gezeigt ist. Die Austrittsfläche des Ventilators **LU,** d.h. hier die Oberseite des Ventilators **LU,** schließt bündig mit der Oberseite des Ventilatorgehäuses **LG** ab und ist unmittelbar unter der Luftdurchtrittsöffnung **OD** des Düsenunterteils **DU** angeordnet. Das Düsenoberteil **DO** ist mit hier nicht weiter dargestellten Abstandhaltern **AH** mit dem Düsenunterteil **DU** verbunden, wobei Düsenober- und -unterteil **DO,DU** konzentrisch zueinander angeordnet sind. Der kleinste Abstand **KA** der Düsenober- und -unterteile **DO,DU** und der Krümmungsverlauf **KV** ihrer einander zugewandten konvexen Halboberflächen **XZ** bestimmt das Verhalten der Düse **VD** in Bezug auf die Sogwirkung bei unterschiedlichen Windverhältnissen.

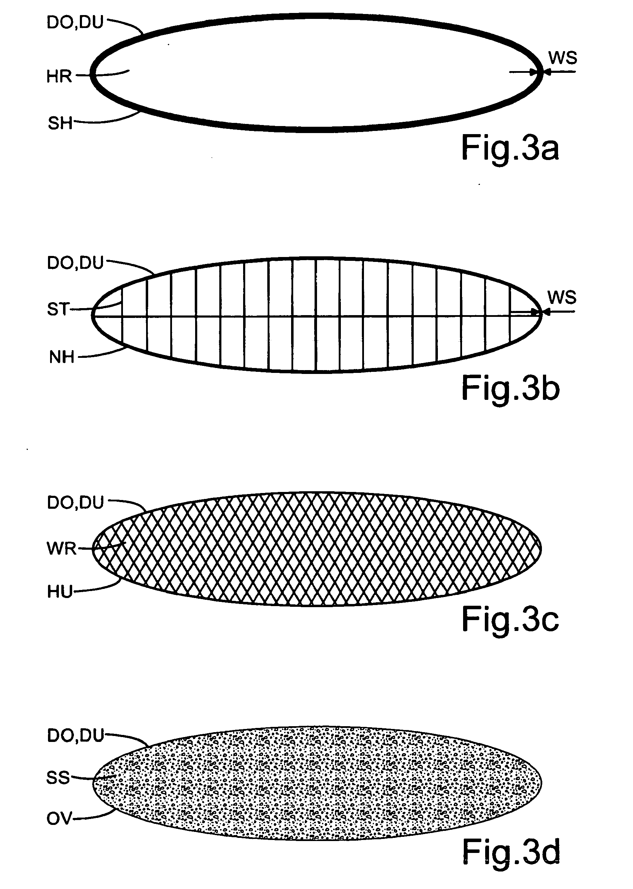

**Figur 3** zeigt schematische Darstellungen von vier Aufbauausführungen der Düsenober- und -unteile **DO,DU.** Befestigungsflächen **BF** und Luftdurchtrittsöffnungen **OD** werden hier nicht gezeigt. **Figur 3a** zeigt einen Hohlraum **HR** mit selbsttragender Hülle **SH.** Dies ist die einfachste Lösung für eine Leichtbaukonstruktion. Sie setzt eine gegen Knickung und Verformung bei Transport und Betrieb ausreichend große Wandstärke **WS** voraus. Eine aufwändigere Lösung stellt die in **Figur 3b** dargestellte Variante mit Streben **ST** mit einer nicht selbsttragenden Hülle **NH** mit deutlich geringerer Wandstärke **WS** dar. Die Wandstärke **WS** kann umso geringer ausfallen, je dichter die Streben **ST** gesetzt sind. **Figur 3c** zeigt eine tragende Wabenstruktur **WR** mit einer lediglich überzugartigen Hülle **HU** zur Erzielung der erforderlichen glatten Oberfläche. In **Figur 3d** wird schließlich eine Variante mit einer schwamm- oder schaumförmigen Struktur **SS** aufgezeigt, bei der die glatte Oberfläche beispielsweise durch oberflächliche Verdichtung **OV** des Baumaterials erzeugt werden kann. Bei dieser Variante können die erforderlichen Ausformungen des Düsenunterteils **DU** mit Befestigungsfläche **BF** und Luftdurchtrittsöffnung **OD** einerseits und der Anformungen an beiden Düsenteilen **DO,DU** für die Montage der Abstandhalter andererseits besonders einfach realisiert werden. Eine massive Variante für die Düsenober- und -unterteile **DO,DU** ist trivial und wird daher hier nicht besonders ausgeführt.

### Bezugszeichenliste

- **AH**: Abstandhalter
- **AT**: Außenlufttemperaturmesser
- **BF**: Befestigungsfläche
- **DG**: Düsengehäuse
- **DO**: Düsenoberteil
- **DU**: Düsenunterteil
- **EG**: Gehäuseabschnitt für Messelektronik
- **HR**: Hohlraum
- **HU**: überzugartigen Hülle
- **IR**: Isolierrohr
- **KA**: kleinste Abstand
- **KV**: Krümmungsverlauf
- **LA**: Ventilatoranschluss
- **LG**: Ventilatorgehäuse
- **LS**: Luftstrom
- **LU**: Ventilator
- **MA**: Messelektronik-Anschluss
- **ME**: Messelektronik
- **NH**: nicht selbsttragende Hülle
- **OA**: Luftaustrittsöffnung
- **OD**: Luftdurchtrittsöffnung
- **OE**: Lufteintrittsöffnung
- **OV**: oberflächliche Verdichtung
- **RK**: rotationssymmetrischer Körper
- **SE**: Sonneneinstrahlung
- **SG**: Sensorgehäuse
- **SH**: selbsttragende Hülle
- **SS**: schwamm- oder schaumförmigen Struktur
- **SS**: schwamm- oder schaumförmige Struktur
- **ST**: Streben
- **TS**: Temperatursensor
- **UL**: Umgebungsluft
- **VD**: rotationssymmetrische Düse
- **WA**: Außenwand
- **WD**: Wind
- **WI**: Innenwand
- **WS**: Wandstärke
- **WR**: Wabenstruktur
- **XA**: abgewandte Halboberfläche
- **XZ**: zugewandte Halboberfläche

## Patentansprüche

1. Außenlufttemperaturmesser mit einem Temperatursensor und einer Einrichtung zur Zwangsbelüftung mit einem elektrisch angetriebenen Ventilator, die in einem gemeinsamen, eine Lufteintrittsöffnung und eine Luftaustrittsöffnung aufweisenden Sensorgehäuse angeordnet sind,
**dadaurch gekennzeichnet, dass**
die Einrichtung zur Zwangsbelüftung eine Venturidüse (VD) aufweist, deren Düsengehäuse (DG) über eine zusätzliche Luftdurchtrittsöffnung (OD) orthogonal zur Durchströmungsrichtung mit der Luftaustrittsöffnung (OA) verbunden ist, wobei durch die Durchströmung der Venturidüse (VD) mit Außenluft an der Luftdurchtrittsöffnung (OD) ein Unterdruck erzeugt wird.

2. Außenlufttemperaturmesser nach Anspruch 1,
**dadaurch gekennzeichnet, dass**
das Düsengehäuse (DG) aus zwei rotationssymmetrischen Körpern (RK) als Düsenunterteil (DU) und Düsenoberteil (DO) gebildet ist, die jeweils zumindest eine konvex geformte Halboberfläche (XZ) gleicher Art aufweisen und die derart parallel zentral übereinander angeordnet und durch zumindest drei Abstandhalter (AH) miteinander verbunden sind, dass die konvex geformten Halboberflächen (XZ) einander zugewandt sind und der Abstand zwischen ihnen aus allen Richtungen zur Mitte hin gleichartig abnimmt und dass der untere rotationssymmetrische Körper (RK) mit dem Sensorgehäuse (SG) spaltfrei verbunden ist.

3. Außenlufttemperaturmesser nach Anspruch 2,
**dadurch gekennzeichnet, dass**
die rotationssymmetrischen Körper (RK) Durchmesser vom ein- bis zweifachen des Durchmessers des Sensorgehäuses (SG) und größte Durchmesser-Höhen-Verhältnisse ihrer einander zugewandten konvex geformten Halboberflächen (XZ) zwischen 50:1 und 5:1 aufweisen.

4. Außenlufttemperaturmesser nach Anspruch 3,
**dadurch gekennzeichnet, dass**
die rotationssymmetrischen Körper (RK) einen symmetrischen Querschnitt mit derselben Form für beide konvex geformten Halboberflächen (XZ, XA) aufweisen, wobei der unteren konvex geformten Halboberfläche (XA) des das Düsenunterteil (DU) bildenden rotationssymmetrischen Körpers (RK) eine Abplattung oder eine Ausnehmung zur Verbindung mit dem Sensorgehäuse (SG) angeformt ist.

5. Außenlufttemperaturmesser nach einem der Ansprüche 2 bis 4,
**dadurch gekennzeichnet, dass**
die rotationssymmetrischen Körper (RK) als Leichtbaustrukturen mit glatter Oberfläche ausgebildet sind.

6. Außenlufttemperaturmesser nach Anspruch 5,
**dadurch gekennzeichnet, dass**
die Leichtbaustruktur als Hohlkörper (HK) mit selbsttragender Hülle (SH) ausgebildet ist.

7. Außenlufttemperaturmesser nach Anspruch 5,
**dadurch gekennzeichnet, dass**
die Leichtbaustruktur mit Streben (ST) und nicht selbsttragender Hülle (NH), mit einer Wabenstruktur (WR) und überzugartiger Hülle (HU) oder mit einer schwamm- oder schaumförmigen Struktur (SS) mit einer oberflächlichen Verdichtung (OV) ausgebildet ist.

## Claims

1. An external air temperature gauge with a temperature sensor and with a device for forced ventilation with an electrically driven ventilator which are arranged in a shared sensor housing having an air inlet opening and an air outlet opening,
**characterized in that**
the device for forced ventilation has a Venturi nozzle (VD), the nozzle housing (DG) of which is connected via an additional air passage opening (OD) orthogonally to the air flow direction with the air outlet opening (OA), with an underpressure being generated by the through flow of the Venturi nozzle (VD) with external air at the air passage opening (OD).

2. The external air temperature gauge according to Claim 1,
**characterized in that**
the nozzle housing (DG) is formed from two axially symmetrical bodies (RK) as lower nozzle part (DU) and upper nozzle part (DO), which respectively have at least one half surface (XZ), convex in shape, of identical type and which are arranged parallel centrally one over the other and connected with each other by at least three spacers (AH) such that the convex-shaped half surfaces (XZ) face each other and the distance between them from all directions decreases in an analogous manner towards the centre and that the lower axially symmetrical body (RK) is connected with the sensor housing (SG) without a gap.

3. The external air temperature gauge according to Claim 2,
**characterized in that**
the axially symmetrical bodies (RK) have diameters from once to twice the diameter of the sensor housing (SH) and maximum diameter/height ratios of their convex-shaped half surfaces (XZ) facing each other of between 50:1 and 5:1.

4. The external air temperature gauge according to Claim 3,
**characterized in that**
the axially symmetrical bodies (RK) have a symmetrical cross-section with the same shape for both convex-shaped half surfaces (XZ, XA), in which a flattening or a recess for connection with the sensor housing (SG) is formed on the lower convex-shaped half surface (XA) of the axially symmetrical body (RK) forming the lower nozzle part (DU).

5. The external air temperature gauge according to any of Claims 2 to 4,
**characterized in that**
the axially symmetrical bodies (RK) are formed as light structures with a smooth surface.

6. The external air temperature gauge according to Claim 5,
**characterized in that**
the light structure is formed as a hollow body (HK) with a self-supporting casing (SH).

7. The external air temperature gauge according to Claim 5,
**characterized in that**
the light structure is formed with struts (ST) and a non self-supporting casing (NH) with a honeycomb structure (WR) and coating-like casing (HU) or with a structure (SS) in sponge or foam form with a superficial thickening (OV).

## Revendications

1. Indicateur de température de l'air extérieur avec un détecteur de température et un dispositif de ventilation forcée à l'aide d'un ventilateur électrique, qui sont disposés dans un boîtier de détecteur commun comportant une ouverture d'entrée d'air et une ouverture de sortie d'air,
**caractérisé en ce que**
le dispositif de ventilation forcée comporte un tube de Venturi (VD), dont le boîtier de tube (DG) est relié à l'ouverture de sortie d'air (OA) par l'intermédiaire d'une ouverture de passage supplémentaire (OD) orthogonale par rapport au sens d'écoulement, une sous-pression étant produite au niveau de l'ouverture de passage d'air (OD) lors du passage de l'air extérieur par le tube de Venturi (VD).

2. Indicateur de température de l'air extérieur selon la revendication 1,
**caractérisé en ce que**
le boîtier de tube (DG) est constitué de deux corps à symétrie de révolution servant de partie inférieure de tube (DU) et de partie supérieure de tube (DO), qui présentent chacune au moins une demi-surface de forme convexe (XZ) du même type et qui sont centralement disposées parallèlement l'une au-dessus de l'autre et reliées ensemble par au moins trois écarteurs (AH), de telle façon que les demi-surfaces de forme convexe (XZ) sont tournées les unes vers les autres et que l'écart entre elles diminue de la même manière dans toutes les directions vers le milieu, et que le corps inférieur à symétrie de révolution (RK) est relié sans espacement au boîtier de détecteur (SG).

3. Indicateur de température de l'air extérieur selon la revendication 2,
**caractérisé en ce que**
les corps à symétrie de révolution (RK) possèdent un diamètre mesurant une à deux fois le diamètre du boîtier de détecteur (SG) et présentant des rapports diamètre-hauteur maximum de leurs demi-surfaces de forme convexe (XZ) tournées l'une vers l'autre qui sont compris entre 50:1 et 5:1.

4. Indicateur de température de l'air extérieur selon la revendication 3,
**caractérisé en ce que**
les corps à symétrie de révolution (RK) présentent une coupe transversale symétrique avec la même forme pour les deux demi-surfaces de forme convexe (XZ, XA), un aplatissement ou un évidement pour la liaison avec le boîtier de détecteur (SG) étant formé dans la demi-surface inférieure de forme convexe (XA) du corps à symétrie de révolution (RK) formant la partie inférieure de tube (DU).

5. Indicateur de température de l'air extérieur selon l'une des revendications 2 à 4,
**caractérisé en ce que**
les corps à symétrie de révolution (RK) sont conçus comme des structures de construction légère avec une surface lisse.

6. Indicateur de température de l'air extérieur selon la revendication 5,
**caractérisé en ce que**
la structure de construction légère est conçue comme un corps creux (HK) avec une enveloppe autoportante.

7. Indicateur de température de l'air extérieur selon la revendication 5,
**caractérisé en ce que**
la structure de construction légère est conçue avec des entretoises (ST) et une enveloppe non autoportante (NH), avec une structure alvéolée (WR) et une enveloppe du genre revêtement (HU) ou encore avec une structure spongieuse ou en mousse (SS) avec une étanchéité de surface (OV).
